Europäisches Patentamt

European Patent Office

Office européen des brevets

(19)

(11) Publication number: **0 123 382**
**A1**

(12) **EUROPEAN PATENT APPLICATION**

(21) Application number: **84301127.1**

(22) Date of filing: **22.02.84**

(51) Int. Cl.³: **B 23 K 20/24**
**B 23 K 20/22, B 23 K 20/16**
**B 23 K 35/00**

(30) Priority: **15.03.83 GB 8307159**

(43) Date of publication of application:
**31.10.84 Bulletin 84/44**

(84) Designated Contracting States:
**AT BE CH DE FR GB IT LI NL SE**

(71) Applicant: **The British Petroleum Company p.l.c.**
**Britannic House Moor Lane**
**London EC2Y 9BU(GB)**

(72) Inventor: **Begg, Alan Robert**
**The British Petroleum Company p.1.c Chertsey Road**
**Sunbury-on-Thames Middlesex, TW16 7LN(GB)**

(74) Representative: **Krishnan, Suryanarayana**
**Kalyana et al,**
**c/o The British Petroleum Company plc Patents Division**
**Chertsey Road**
**Sunbury-on-Thames Middlesex TW16 7LN(GB)**

(54) **Diffusion bonding of aluminium surfaces coated with gallium.**

(57) This invention relates to a method of diffusion-bonding aluminium surfaces which have been precoated with gallium. The bonding is achieved by clamping together the coated surfaces at a pressure of 30-100 MPa at elevated temperature. A peel test applied to the bonded product showed that final failure did not follow the plane of bonding.

EP 0 123 382 A1

1

## DIFFUSION-BONDING OF ALUMINIUM SURFACES
## COATED WITH GALLIUM

The present invention relates to a method of promoting diffusion-bonding of aluminium surfaces.

Aluminium and its alloys are used in a wide variety of applications because they combine low weight and high strength with excellent inherent corrosion and oxidation resistance. Unfortunately, the stable aluminium oxide coating which gives the metal its resistance to chemical and thermal attack also makes aluminium awkward to bond to itself. Although a number of metallurgical bonding techniques are available (eg vacuum brazing, welding, reactive flux soldering, etc) all of these suffer drawbacks of one sort or another with respect to bonding aluminium surfaces. Primarily these techniques involve holding the surfaces to be bonded together in contact under relatively low pressures e.g. below 5 MPa and applying the soldering or bonding component at elevated temperature. Moreover, the soldering or bonding component forms the interface between surfaces bonded and invariably this is the weakest point of the bonded composite. The commonest methods of joining aluminium therefore remain mechanical fastening (bolts, rivets, etc) or adhesives - some 70 per cent of the non-structural joints involving aluminium surfaces in an aircraft are glued.

Considerable effort has been directed worldwide towards the diffusion-bonding of aluminium. True diffusion-bonding involves clamping the two surfaces to be joined together and heating. The resultant bonded composite has no recognisable third component forming the interface because the bonding agent diffuses into the

1

grain boundaries of the surfaces being bonded. Many steel and titanium alloys will undergo diffusion-bonding under the appropriate conditions of temperature and pressure. Aluminium, however, has proved more difficult to bond.

Aluminium has also been bonded by soldering or brazing either using solders containing gallium as described by Spasskii A.G. et al in "Welding Production", 1970, 17(8), pp 64-65 or by dipping the aluminium surfaces in a molten metal bath containing between 0.005 and 0.2% by weight of gallium as described in GB 1421958. In both these processes, the aluminium surfaces wetted with gallium are held together for a period and thereafter heated at elevated temperature to achieve the desired soldering or brazing. However, wetting of aluminium surfaces with gallium alone is difficult.

It has now been found that the wetting of the aluminium surface by gallium can be accelerated by applying a precoating of a gallium compound on the substrate surface.

Accordingly, the present invention is a method of diffusion-bonding aluminium surfaces which have been precoated with gallium by clamping together the gallium coated surfaces and applying a pressure of 30-100 MPa at elevated temperature.

The precoating of gallium may be applied on the surface by (a) chemical or electrochemical decomposition of a gallium compound eg a gallium nitrate solution to gallium in contact with the surface, or (b) by rubbing gallium metal or an alloy thereof on the surface.

To deposit gallium chemically on the aluminium surfaces to be bonded, the surface is suitably dip-coated with a 1% w/w aqueous solution of gallium nitrate produced by dissolving gallium nitrate in nitric acid. The dip-coated surface is heated at 60°C for 1 hour. A visible colour change of the aluminium surface is indicative that reaction has taken place.

Alternatively, the gallium may be deposited electrochemically on the aluminium surface using a gallium nitrate electrolyte by conventional means using the aluminium as the cathode.

It is preferable to rub additional gallium metal physically on to the substrate surfaces on which gallium has been deposited from gallium nitrate. The additional rubbing with gallium metal improves the bonding strength of the surfaces.

In yet another method gallium may be applied to the aluminium surface by rubbing with molten or liquid gallium metal. Smearing with liquid or molten gallium whilst abrading the aluminium surface and wiping away excess of the gallium metal can also be used. An alloy of gallium and aluminium produced by soaking aluminium in liquid gallium so as to absorb the latter into the surface of the former may also be used to precoat the aluminium surface by rubbing. If this method is used it is necessary to rub additional gallium metal physically onto the precoated surface.

Whichever method is used to apply the gallium on the surface, it is preferable that the amount of gallium applied is such that the diffusion bonded product has an overall gallium concentration of 1-10 mg/cm$^2$.

The gallium coated surfaces are then clamped together at a pressure of 30-100 MPa, suitably from 45 to 75 MPa and preferably from 55-65 MPa. The surfaces thus clamped are subjected to heat treatment at a temperature above 150°C, preferably between 200 and 250°C for a significant duration eg for at least 1 hour, preferably from 70-80 hours. Significant bonding takes place after only 1 hour although higher temperatures may be necessary to remove fully the effects of embrittlement. Thereafter, the bonded material so produced is ready for use.

The present invention is further illustrated with reference to the following Examples.

Example 1

(a) Precoating

Strips of commercial purity (99 per cent) aluminium, 100 mm x 10 mm x 1.5 mm were precoated with gallium over an area 10 mm square at one end. Precoating was achieved by rubbing the area with a piece of aluminium/gallium alloy, which was prepared by infiltrating aluminium with liquid gallium at a temperature of around 50°C. The rubbing process was carried out at 40° - 50° and caused a slight change of colour of the aluminium metal surface. This precoated area was then highly receptive to wetting by liquid gallium.

(b)  Bonding

Two precoated strips were laid on a hot plate (40° - 60°) and gallium applied by melting a small amount from a solid ingot.  This was thinly smeared over the precoated area using a piece of scrap aluminium.  The two strips were then clamped together with coated surfaces in contact, using toolmakers clamps which provided relatively uniform loading at an estimated stress of 60 MPa. Clamped specimens were then transferred to an oven and heated to 220°C for various lengths of time, before being removed.

The 'peel' test used to assess the strength of bond formed was based on the ASTM 'Peel Resistance of Adhesives' Test ASTM D1876-72 and involved gripping the free ends of the specimen in an Instron tensile test machine and pulling the joint apart at a rate of 5 mm/min.  During the test, the load and displacement were continuously monitored, allowing the peel strength (maximum load/unit length along which tearing occurs) and bond toughness (energy absorbance/unit area of bond) to be calculated.  The results are shown in the Table below.

It is clear that the present results are substantially higher than those obtained by conventional techniques and generally have less scatter, most lying within about ± 20 per cent of a mean for any given temperature.  Many of the specimens (see Table) did not fail by peeling through the joint, but tore through the base metal.

Both strength and toughness appear to increase slightly with increasing time of heating at 220°C.

TABLE

| Heating Time h | Peel Strength kN/m | Bond Toughness $kJ/m^2$ | Gallium Concentration $mg/cm^2$ |
|---|---|---|---|
| 1 | 17 | 25 | 1.56 |
| 1 | 64 | 65 | 1.60 |
| 1 | 29 | 45 | 2.01 |
| 1 | 106 | 150 | 2.35 |
| 2 | 94 | 85 | 2.09 |
| 2 | 70 | 100 | 2.44 |
| 2 | 88 | 110 | 2.95 |
| 4 | 24 | 35 | 1.63 |
| 4 | 106 | 75 | 1.55 |
| 4 | 75 | 65 | 3.09 |
| 8 | 103 | 115 | 3.90 |
| 8 | 79 | 85 | 2.32 |
| 8 | 88 | 95 | 2.89 |
| 16 | 65 | 65 | 3.12 |
| 16 | 79 | 75 | 3.82 |
| 16 | 85 | 115 | 1.36 |
| 24 | 71 | 70 | 2.60 |
| 24 | 93 | 95 | 1.46 |
| 48 | 76 | 65 | 1.84 |
| 48 | 110 | 95 | 3.36 |
| 96 | 132 | 125 | 4.09 |
| 96 | 131 | 150 | 4.65 |
| 192 | 115 | 135 | 1.78 |
| 192 | 92 | 125 | 2.60 |
| 192 | 88 | 135 | 1.84 |
| 384 | 170 | 125 | 5.58 |
| 384 | 64 | 105 | 3.59 |
| 384 | 102 | 155 | 4.94 |

Example 2

Strips of aluminium 9 mm wide by 100 mm long were rubbed on the end 10 mm x 9 mm with an aluminium/gallium alloy at a temperature of around 50°C. More gallium was applied and two strips clamped together to bring the gallium areas into contact under a pressure of about 50 MPa. The specimens were heated to 220°C for 100 hours. The loads required to peel apart two such pairs of bonded strips were 1.31 and 1.32 KN respectively. Final failure did not completely follow the plane of bonding.

Claims:

1. A method of diffusion-bonding aluminium surfaces which have been precoated with gallium comprising clamping together the gallium coated surfaces and applying a pressure of 30-100 MPa at elevated temperature.

2. A method according to claim 1 wherein the precoating of gallium is applied on the surface by (electro)chemical decomposition of a gallium compound to gallium in contact with the surface.

3. A method according to claim 2 wherein the gallium compound is gallium nitrate.

4. A method according to claim 1 wherein the precoating of gallium is applied on the surface by rubbing gallium metal or an alloy thereof on the surface.

5. A method according to claim 4 wherein the gallium metal is in the molten or liquid state.

6. A method according to claim 4 wherein the alloy of gallium and aluminium is produced by soaking aluminium in liquid gallium.

7. A method according to claim 6 wherein aluminium surface coated with an alloy of gallium and aluminium is further treated by rubbing additional gallium metal thereon.

8. A method according to claim 1 wherein the aluminium surfaces precoated with gallium are clamped together at a pressure of 45 to 75 MPa and a temperature above 150°C.

9. A method according to claim 1 wherein the aluminium surfaces precoated with gallium are clamped together at a pressure of 45 to 75 MPa and a temperature of 200-250°C for at least one hour.

10. A diffusion bonded product derived by bonding together aluminium surfaces precoated with gallium said product having an overall gallium concentration of 1-10 mg/cm$^2$.

7

## European Patent Office

**EUROPEAN SEARCH REPORT**

0123382

Application number

EP 84 30 1127

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 106 804 (COMMISSARIAT A L'ENERGIE ATOMIQUE) <br> * Page 5 * | 1,4 | B 23 K 20/24 <br> B 23 K 20/22 <br> B 23 K 20/16 <br> B 23 K 35/00 |
| Y | | 5,6 | |
| A | | 8,9 | |
| Y | FR-A-2 187 939 (ALUMINIUM SUISSE) <br> * Page 8 * | 5,6 | |
| A | FR-A-2 460 176 (CENTRE STEPHANOIS) <br> * Page 7, claim 1 * | 7 | |
| A | US-A-2 824 365 (UNITED STATES ATOMIC ENERGY COMMISSION) <br> * Column 2, lines 45-54 * | 1,4 | **TECHNICAL FIELDS SEARCHED (Int. Cl. ³)** <br><br> B 23 K |

The present search report has been drawn up for all claims

| Place of search | Date of completion of the search | Examiner |
|---|---|---|
| THE HAGUE | 22-06-1984 | HOORNAERT W. |

**CATEGORY OF CITED DOCUMENTS**

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503. 03.82